(19) Europäisches Patentamt
European Patent Office
Office européen des brevets

(11) EP 2 070 664 A1

(12) EUROPEAN PATENT APPLICATION

(43) Date of publication:
17.06.2009 Bulletin 2009/25

(51) Int Cl.:
B25J 9/16 (2006.01)

(21) Application number: 07024300.1

(22) Date of filing: 14.12.2007

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(71) Applicant: Montanuniversität Leoben
8700 Leoben (AT)

(72) Inventors:
• O'Leary, Paul
8323 Sst. Marein bei Graz (AT)

• Harker, Matthew
8700 Leoben (AT)
• Reindl, Ingo
8700 Leoben (AT)

(74) Representative: Haeusler, Rüdiger Hans-Jörg
Dilg, Haeusler, Schindelmann (DHS)
Patentanwaltsgesellschaft mbH
Leonrodstrasse 58
80636 München (DE)

(54) Object processing system

(57) An apparatus (100) for processing an object (101,102,103), the apparatus comprising a measurement device (111) adapted for performing a measurement on a reference body (112), a robot (105) arranged apart from the measurement device (111) and adapted to process an object (101,102,103), and a calibration unit (119) adapted for calibrating the processing by directly mapping a coordinate system of the measurement device (111) to a coordinate system of the robot (105) based on the measurement on the reference body (112).

Fig. 1

EP 2 070 664 A1

**Description**

The invention relates to an apparatus for processing an object.

The invention further relates to a method of processing an object.

Moreover, the invention relates to a program element.

Further, the invention relates to a computer-readable medium.

Fabricated elements (for instance cast parts) are manufactured in large numbers and in large geometrical variety. Such elements, members or parts are employed, for instance, in the automobile industry. Robots are employed during the manufacture and assembling of such members or parts. The position of members to be processed by a robot and the position of a robot should be adjusted to ensure that a robot processes (for instance deburs) the member correctly.

Hanqi Zhuang, Zvi S. Roth (1996), "Camera Aided Robot Calibration", CRC Press, ISBN 0-8493-9407-4, Chapters 2 to 4 and 8 gives an introduction into the field of robot calibration using images acquired by a camera.

US 6,321,137 discloses a system for calibrating a robot used for inspecting an object to maintain the accuracy of the robot during inspection of workpieces on a production basis. The system includes means for storing a mathematical model of the robot, means for measuring the position of a target and then calibrating the robot based upon input from the mathematical model and the position of the target.

However, such a robot calibration system requires a high computational burden for performing calibration and suffers from the heavy weight of a camera system mounted on the robot for capturing images of the target. Furthermore, a camera may be an obstacle for processing.

It is an objective of the invention to provide a powerful robot calibration system.

In order to achieve the objective defined above, an apparatus for processing an object, a method of processing an object, a program element, and a computer readable medium according to the independent claims are provided.

According to an exemplary embodiment of the invention, an apparatus (such as a machine tool) for processing an object (such as a workpart or workpiece) is provided, the apparatus comprising a measurement device (such as an optical measurement system) adapted for performing a measurement on a reference body (such as a calibration body), a robot arranged apart from (for instance mechanically decoupled from, or arranged separately from) the measurement device and adapted to process the object, and a calibration unit (such as a calculation or computing resource) adapted for calibrating (for instance for performing a spatial calibration) the processing (that is the operation mode according to which the object will be subsequently processed by the apparatus) by directly (that is without performing intermediate calculation procedures) mapping a coordinate system of the measurement device to a coordinate system of the robot (that is by carrying out a coordinate transformation between measurement coordinates and robot coordinates) based on the (results of the) measurement on the reference body.

According to another exemplary embodiment of the invention, a method of processing an object by a robot arranged apart from a measurement device is provided, the method comprising performing a measurement on a reference body using the measurement device, and calibrating the processing by directly mapping a coordinate system of the measurement device (that is a measurement device-internal coordinate system) to a coordinate system of the robot (that is a robot-internal coordinate system) based on the measurement on the reference body.

According to still another exemplary embodiment of the invention, a program element (for instance a software routine, in source code or in computer-executable code) is provided, which, when being executed by a processor, is adapted to control or carry out a method of processing an object using a robot having the above mentioned features.

According to yet another exemplary embodiment of the invention, a computer-readable medium (for instance a CD, a DVD, a USB stick, a floppy disk or a harddisk) is provided, in which a computer program is stored which, when being executed by a processor, is adapted to control or carry out a method of processing an object using a robot having the above mentioned features.

The calibration scheme according to embodiments of the invention can be realized by a computer program, that is by software, or by using one or more special electronic optimization circuits, that is in hardware, or in hybrid form, that is by means of software components and hardware components.

In the context of this application, the term "object" may particularly denote any physical structure (particularly any technical apparatus, member, or a portion thereof) in the real world which may be under development or production or machining and shall therefore be processed assisted by a robot. Examples of such a physical structure may be a member or tool such as a cast component or a larger multiple component apparatus (such as a vehicle, more particularly a car). "Objects" may be complete products or semifinished parts, members made of electrically conductive or electrically insulating material, carbon fiber members adhered to steel parts, etc.

In the context of this application, the term "measurement device" may particularly denote any system capable of performing a measurement on a reference body, that is to say for determining a position or other spatial information characterizing a localization of the reference body in a predetermined coordinate system. Such a measurement device may be an optical measurement device which may be based on the emission and detection of light reflected (or generated, for instance by fluorescence) by the reference body to thereby derive positional information. However, such a measurement device may be performed on the basis of any kind of electromagnetic radiation, such as infrared radiation, ultraviolet radiation or X-rays.

The term "reference body" may particularly denote a physical structure which may be adapted and used for calibration purposes and may have known physical properties. Such a reference body may have any desired shape, for instance may be a cylinder having a pre-known radius, length, etc. By performing a measurement on the basis of the reference body, information required for calibration may be collected.

The term "calibration unit" may particularly denote a unit capable of performing data processing to thereby calibrate a robot of the apparatus to ensure that the robot processes (for instance grips) an object under manufacture with a sufficient spatial accuracy.

The term "directly mapping coordinate systems" may particularly denote performing a calculation to transfer coordinates in the one coordinate system into coordinates of another coordinate system without involving a further coordinate system, particularly without involving a real-world coordinate system. Since the knowledge or estimation of real-world coordinates are not required according to exemplary embodiments of the invention, the accuracy of the system is defined by the repetition accuracy (such as a statistical variance between different actions, and the repetition accuracy may be in the order of magnitude of 100 $\mu$m or less), and is not limited by the absolute accuracy of the measurement system (which may be caused by effects such as the thermal expansion of components of the system during use, and may be in the order of magnitude of millimeters to centimeters or more). Thus, data obtained by the measurement device may be transferred into coordinates processible by the robot.

According to an exemplary embodiment of the invention, an object processing apparatus may be calibrated before starting the actual processing. However, an explicit calibration of the robot may be dispensable, instead of this an implicit closed loop calibration of the entire system can be performed. Such a spatial calibration may be performed by carrying out a measurement on a reference body (which may be mounted on the robot) having known dimensions and shape, and by using this information for deriving a transformation matrix for mathematically transferring coordinates of the measurement device and of the robot. The measurement device may be mounted independently of the robot, i.e. does not have to be mounted on the robot. By taking this measure, it may be securely prevented that the heavy measurement device has to be moved together with the robot, which may save power and may increase accuracy. Moreover, the large-size measurement device does not disturb operation of the robot both during a calibration phase and an object processing phase. In contrast to this, according to an exemplary embodiment of the invention, the measurement device may be located at a fixed position in a lab, and a reference body may be installed on the robot and may be used during a calculation. Furthermore, by providing the measurement device apart from the robot (that is to say in a manner that a motion of the robot does not effect a motion of the measurement device), the robotic processing is not disturbed by the measurement device, and the flexibility is increased. In contrast to this, only a small size reference body has to be attached to the robot.

Furthermore, by means of a direct mapping between measurement device coordinates and robot coordinates, a numerically simple procedure can be established which can be carried out (essentially) in real time, thereby promoting acceleration of the object processing and increasing the throughput on an industrial scale.

Thus, a method for the automatic calibration of a robot by generation of a transformation matrix may be provided, which transformation matrix may be used during the duty cycles of the apparatus in order to project the position of workpieces from the coordinate system of the measurement into the coordinate system of the robot, without the indirection of a real-world coordinate system. The computational effort for such a projection is modest, so that the calculation may be carried out in real time and high reliability.

For such a calibration, the robot may be equipped with a cylinder (or any other appropriately shaped reference body) arranged at a grip arm or the like. The robot may guide the cylinder or any other reference body to a plurality of positions (for instance to four or more positions) for calibration. During this procedure, a surface of the reference body may be cut by a stationary light plane, for instance a planar light beam generated by a laser source. The intersection line can be captured by a spatially fixed camera. From the known geometrical properties of the reference body (particularly from the known radius of the cylinder) and from the positions of the intersection line, it is possible to derive positional information for calibration.

This may allow to determine elements of a projection matrix which projects the measurement coordinate system to the robot coordinate system, or vice versa. When the projection matrix has been determined, the following procedural steps can be performed with reasonable numerical effort.

Subsequently, by simply determining a position and an orientation of a workpiece (or any other object), this position can be directly recalculated or converted into the robot coordinate system. This may be performed with a very low computational burden and therefore quickly, so that a precise and fast positioning of the robot with respect to workpieces can be ensured.

In a scenario in which, in addition to a position of a reference body/a workpiece, it is also desired to determine an orientation of the reference body/the workpiece, it is possible to generate a plurality of light planes and/or one or more movable light planes. This may further increase the accuracy.

By fixing the reference body to the robot and by providing the measurement device separate from the robot, the versatility of the system may be increased, the flexibility may be improved and the computational burden for calibration and coordinate transformation may be reduced. By providing a separate reference body (and not performing the calibration on the object to be processed), the accuracy may be improved, and also the speed of the calculation may be increased, since an appropriate choice of the geometry of the reference body (for instance cylindrically) may allow to perform the calculation of the transformation matrix with low numerical effort.

Therefore, according to an exemplary embodiment, a method for the automatic calibration of a robot may be provided, in which the robot carries a cylinder or another reference body in a gripping arm and guides the reference body to a plurality of a light planes resting in a spatially fixed (world) coordinate system. It is also possible that the robot grips a reference body for calibration, and puts the reference body back to its original position after calibration. The cross-sectional curves (for instance ellipses in the case of a cylindrical reference body) can be detected by a spatially fixed camera and may serve for the calculation of a projection matrix mapping a measurement system coordinate system into a gripping arm coordinate system (excluding calculations regarding other coordinate systems). When the working piece is cut by a corresponding light plane and is captured with the camera, the direct transformation of the workpiece coordinate system into the gripping arm coordinate system is possible. In the case that the robot shall grip an object, the (relevant) intersection points with the light plane may be transferred into the gripping arm coordinate system using the previously determined transformation matrix. Therefore, intervening coordinate systems can be eliminated, and an automatic calibration can be performed:

Embodiments of the invention may be implemented for gripping cast parts. However, conventionally, the problem may occur how the robot can find the position of the cast part, so that a coordination between robot and an optical coordinate system may be required. According to an exemplary embodiment of the invention, the mutual coordination between robot coordinate system and measurement coordinate system is performed in a direct manner without involving an "absolute" calibration which would require to calculate coordinates in the real-world coordinate system. Thus, the coordinates are only harmonized bilaterally between robot system and measurement system. In other words, a direct mapping of the coordinate system between the measurement system and the robot system occurs, so that the real-world coordinates are not known and are not used, thereby reducing the computational burden. By using mapping rules formulated in a mathematical manner by such a transformation matrix, it can be ensured that the robot grips the object at the correct position.

According to an exemplary embodiment, a 3D camera monitors the world in a steric manner (for instance, in such a steric or three-dimensional concept, a circle may be mapped to an ellipse). Distortions or deformations as well as errors in size may therefore be compensated.

According to exemplary embodiments of the invention, a high absolute accuracy can be achieved, and the accuracy of the system may depend on the reproducibility and the repetition rate of the robot. The lab system may be disregarded during calibration, since the adjustment only occurs between measurement system and robot system.

It may be advantageous that the transformation matrix is updated in accordance with modified operation conditions of the processing apparatus. For instance, by a thermal expansion following a turn-on procedure of a processing apparatus, it is possible that the geometric properties of the processing apparatus are changed. Such changes may require a new tuning of the system and can be compensated by repeating the calibration procedure during operation of the processing apparatus. For instance, between two robot-assisted deburring procedures or flash removal procedures during post-processing of cast parts, the robot may drive into a calibration light path again, and can repeat the calibration between different processing tasks. This may allow to further reduce the holding time of an apparatus, thereby allowing for a higher throughput with a higher accuracy.

Exemplary fields of application of exemplary embodiments of the invention are processing operations using robots (for tool processing), accurate processing with low cost robots, etc.

According to an exemplary embodiment of the invention, a mutual calibration of robot and measurement system may be performed, so that the same measurement system may be used for detecting reference bodies in a calibration phase and objects in a processing phase. The robot itself may be free of a measurement system, and an intrinsic part of the robot or an external reference body attached to the robot may be used for a reference measurement. An absolute calibration of a robot may therefore become dispensable. Therefore, disturbing equipment attached to the robot (such as a measurement system) which may be required for an absolute calibration may be made dispensable, and the sensitive measurement system (which may be sensitive to swarf or the like) may be located remotely from the robot and thus protected against processing influences such as swarf. Furthermore, perturbations of the robot resulting from vibrations of the measurement device and/or perturbations of the measurement device resulting from vibrations of the robot may be suppressed or eliminated.

According to an exemplary embodiment of the invention, one or a plurality of cylinders or other reference bodies may be attached to the robot. This may allow to derive a well-defined set of analytical equations which can be solved explicitly. However, at the end of the calculations, it may be necessary to perform a relatively simple least squares fit. Therefore, the combination of the analytically solvable equations and the finishing least squares fit allows for a numerically simple calculation and therefore for a fast calibration procedure. Therefore, the reference object may be an object which allows for an essentially analytical calculation of the transformation matrix. As an alternative to a circular cylinder, it is possible to use any other cylindrical structure or a combination of cylindrical structures. Providing such a more sophisticated calibration structure may further increase the speed of the calibration, since it is then possible to drive the calibration structure to a lower number of positions, or to reduce or minimize position/orientation errors. Elliptical cylinders may be used as well.

Since the calculation scheme according to exemplary embodiments of the invention is very fast, it is possible to compensate for time-dependent alterations of the robot geometry (which may in the order of magnitude of millimeters due to thermal expansion), so that temperature effects can be compensated dynamically.

Next, further exemplary embodiments of the apparatus will be explained. However, these embodiments also apply to the method, to the program element and to the computer-readable medium.

The robot may be mounted in a movable manner, and the measurement device may be mounted spatially fixed. By providing robot and measurement device separately and mechanically/functionally decoupled from one another, vibrations of the robot do not disturb the measurement device, and the robot does not have to carry the heavy measurement device. This further allows to improve the accuracy, since it simplifies the calculation scheme particularly when the reference body is attached to the robot.

The measurement device may be an image acquisition device adapted for acquiring an image of the reference body and/or for acquiring an image of the object. The same measurement device may be used during the calibration phase for imaging the reference body, and during the processing phase for imaging the object(s) to be processed, such as workpieces to be processed by the robot.

The calibration unit may be adapted for calibrating the processing by directly mapping a coordinate system of the image space of the image acquisition device to the coordinate system of the robot. For instance, pixel coordinates may be transferred into the coordinate system of the robot, without the need to take into account real-worlds coordinate of a lab in which the apparatus is installed. Particularly, the calibration unit may be adapted for calibrating the processing by directly mapping an image pixel coordinate system of the image space of the image acquisition device to the coordinate system of the robot.

The measurement device may be a plane-of-light (POL) measurement device. Such a plane-of-light measurement device may comprise a light source (such as a laser) generating a planar light beam and may comprise a detector (such as a CCD camera) which detects a light curve generated on a surface of the reference body as a consequence of the irradiation of the reference body with the light plane.

The measurement device may therefore comprise an electromagnetic radiation source adapted for irradiating the reference body with a planar electromagnetic radiation beam. Furthermore, the measurement device may comprise a camera adapted for detecting a projection of the planar electromagnetic radiation beam on a surface of the reference body or the object. The camera and the electromagnetic radiation source may be adjusted to one another and may be oriented with respect to one another so that the camera can capture a beam which is generated by the electromagnetic radiation source and is impinged on the object or on the reference body.

The calibration unit may be adapted for calibrating the processing by directly mapping the coordinate system of the measurement device to the coordinate system of the robot without involving calculations regarding a real-world coordinate system. By disregarding the real-world coordinates, a numerically easy calibration scheme may be performed without involving high computational burden and therefore a long calculation time.

The calibration unit may further be adapted for calibrating the processing by calculating a calibration matrix which directly maps the coordinate system of the measurement device to the coordinate system of the robot, or vice versa. Since this matrix may be used for transferring robot coordinates into measurement device coordinates, and vice versa, the calculation time may be kept small. Such a matrix may be stored with low memory requirements, further simplifying the system.

The reference body may be designed in such a manner that the calculation of the calibration matrix is performable essentially analytically. However, a straightforward least squares fit at the end of the calculation may be necessary. However, since the main part of the calculation algorithm is performed analytically or can be solved explicitly, the computational burden remains small.

The robot which may be part of the apparatus may be adapted to move the reference body to a predetermined number of predetermined positions, and the measurement device may be adapted for performing a measurement on the reference body at the predetermined number of predetermined positions. For example, the predetermined number of positions may be four, or may be larger than four. When the robot has taken the reference body to four or more positions and the measurement apparatus has captured images of the reference body at four or more positions (i.e. at at least four positions), the knowledge of the geometry of the reference body in combination with the captured images may allow a processing unit or calculation unit to determine a transformation matrix on the basis of this information.

The reference body may be mounted on the robot, that is to say may be fixedly installed on the robot so that a motion of the robot is directly transferred to a motion of the reference body. The reference body may be a rotationally symmetric body such as a cylindrical symmetric body, or a circular cylindrical body. However, other shapes such as an elliptic cylindrical body, a spherical shape, a prism shape, etc. are possible as well.

The geometry data characterizing the reference body may be pre-stored in the calibration unit, thereby allowing to use this information for calibration purposes.

The calibration unit may be adapted for continuously or intermittently repeating the calibration during processing the object or during processing a plurality of objects. For instance, after expiry of a predetermined time interval, the calibration may be repeated. Or, when a sensor such as a temperature sensor indicates a relevant change of the environmental conditions, the calibration may be repeated. It is also possible that, between two consecutive object processing intervals, the real time calibration may be updated or repeated to further increase the accuracy.

A control unit may be provided for controlling the robot to process the object in accordance with the calibration. When the calibration has been performed, the apparatus may start with the processing of the object. Corresponding control information allowing a robot to grip or operate an object at the correct position may then be provided to the robot by the control unit. Such a control unit may control the robot to process the object by directly mapping the coordinate system of the measurement device to the coordinate system of the robot based on the measurement performed by the measurement device on the object to be processed. Therefore, the measurement device may determine the actual position of the object to be processed, and this information may be transferred to the robot via the previously determined transformation matrix.

Examples of objects which may be processed by the apparatus are any kinds of machines, machine parts, workpieces, etc. However, embodiments of the invention may also be implemented in other technical fields. It is possible that deburring of a machine member is performed by a system calibrated in accordance with an embodiment of the invention.

The aspects defined above and further aspects of the invention are apparent from the examples of embodiment to be described hereinafter and are explained with reference to these examples of embodiment.

The invention will be described in more detail hereinafter with reference to examples of embodiment but to which the invention is not limited.

Figure 1 to Figure 3 illustrate apparatuses for processing an object according to exemplary embodiments of the invention.

Figure 4 and Figure 5 illustrate a measured image in an image frame (Figure 4) and in a robot coordinate frame (Figure 5).

The illustration in the drawing is schematically. In different drawings, similar or identical elements are provided with the same reference signs.

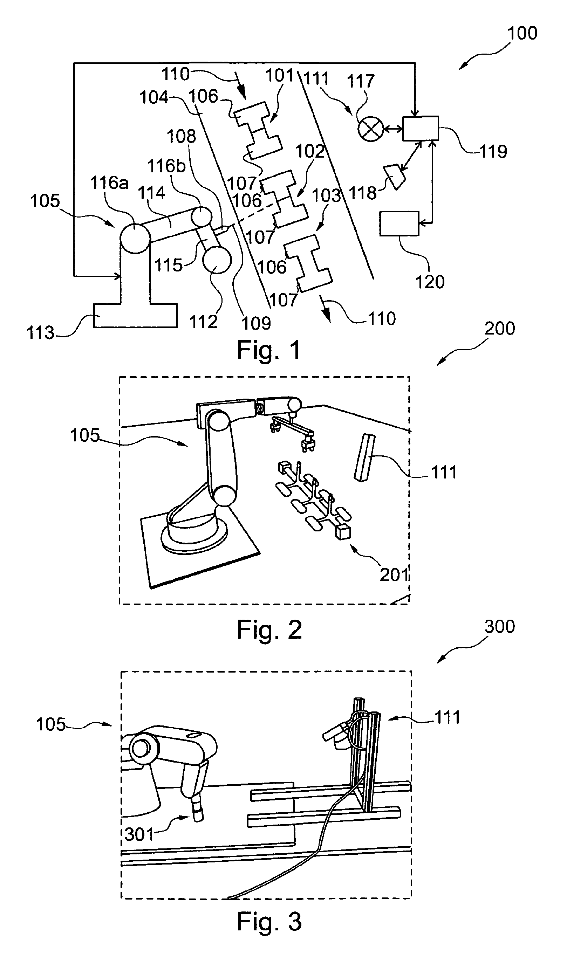

In the following, referring to **Fig. 1,** an apparatus 100 for processing workpieces 101 to 103 transportable along a conveyor belt 104 according to an exemplary embodiment of the invention will be explained.

The system 100 shown in Fig. 1 comprises a robot 105 which performs the task of connecting two essentially T-shaped metallic components 106, 107 to form essentially H-shaped workpieces 101 to 103. Such a connection can be formed by laser welding. The two components 106, 107 of the workpiece 103 have already been connected, whereas the components 106, 107 of the workpieces 101 and 102 are not yet connected. A laser welding device 108 (as an example for an object processing unit with which the robot 105 may be equipped for processing the objects 101 to 103) is attached to the robot 105 and serves for connecting the metallic components 106, 107 to form the workpieces 101 to 103 by laser welding using a laser beam as indicated by a broken line 109 in Fig. 1.

Arrows 110 indicate a transportation direction of the workpieces 101 to 103 on the conveyor belt 104.

However, when the robot 105 generates and aligns the welding laser beam 109 to a correct position at which the components 106, 107 which are to be welded together abut, a correct spatial calibration of the robot 105 is necessary, and may be performed as will be described in the following in more detail.

Before processing the workpieces 101 to 103, the apparatus 100 may perform a calibration. For this purpose, a measurement apparatus 111 is foreseen which performs a measurement on a reference cylinder 112 attached at an end portion of the robot 105.

The robot 105 comprises a support or base 113, a first arm 114, and a second arm 115. Hinges 116a, 116b are provided to move the arms 114, 115 relative to one another. At the second arm 115, the laser welding device 108 is mounted. At the end of the arm 115, the cylindrical reference body 112 is mounted.

The measurement device 111 comprises a light source 117 adapted for generating a (for instance planar) light beam which may be directed onto the reference body 112 of the robot 105. When such a light source 117 (for instance a laser) generates a planar beam, this beam may generate a characteristic (for instance curved) light pattern on the surface of the calibration cylinder 112. The robot 105 may move the cylindrical object 112 to different positions, so that at each of the positions, a CCD camera 118 of the measurement device 111 may measure the light pattern on the surface of the cylindrical body 112. The geometrical properties of the cylinder 112 (such as radius and length) may be pre-stored in a calibration unit 119 which is bidirectionally coupled to the light source 117 and the detector 118. Based on the light patterns on the surface of the cylinder 112 acquired during the calibration phase, the calibration unit 119 may calculate a transformation matrix which has the capability to directly map a coordinate system of the measurement device 111 to a coordinate system of the robot 105 based on the previous measurement on the reference cylinder 112. When such a calibration has been performed, the corresponding calibration matrix may be stored in a memory of the calibration unit 119.

A user interface 120 may communicate bidirectionally with the calibration unit 119, may allow a user to provide the system 100 with control commands and may allow the user to perceive information output via a display or the like.

When the objects 101 to 103 have to be processed later by laser welding via the robot 105, the measurement device 111 may measure the positions of the objects 101 to 103 (in the present case the position of the central object 102) and may transfer, using the transformation matrix, this information to a coordinate system of the robot 105. This may allow the robot 105 to orient the laser welding device 108 in such a manner that the beam 109 is directed to the correct position on the workpiece 102.

The calibration unit 119 may be a central processing unit (CPU) or a microprocessor having data processing capabilities and memory capabilities.

As can be taken from Fig. 1, the robot 105 is mounted in a movable manner by means of the hinges 116a, 116b, wherein the measurement device 111 is provided at a fixed position. By disregarding coordinates of a real-world coordinate system, but instead of this directly transferring coordinates of the measurement device 111 into coordinates of the robot 105, or vice versa, the computational burden when calculating the calibration matrix may be small, and therefore the calibration can be performed essentially in real time.

In the following, an apparatus and a procedure for the automatic localization of an object to enable automatic processing with a robot according to further exemplary embodiments of the invention will be explained.

Such an embodiment may provide an apparatus and a procedure which enables the determination of the position, orientation and geometric of objects in the coordinate frame of a robot. A fully automated self-calibration procedure may therefore be made possible, involving auto-calibration and plane of light measurements.

In many applications it is desired that a robot automatically picks a part from a production line. In other cases, the object may be automatically processed or machined by the robot. This may require either that the position and geometry of the object are known in advance or that they can be measured accurately.

The measurement of the position of the object and the automatic positioning of the robot may involve particularly the following issues:

1. Prior to measurement and gripping or processing of an object, it is necessary to calibrate the measurement system and to register the coordinate frames of the robot and the measurement system.
2. A suitable measurement system should be capable to measure the appropriate geometric properties of the objects.
3. From the geometry, position and orientation of the object, positioning data for the robot shall be derived.

Conventionally, a camera may be placed above the object to be gripped. The camera may acquire an image of the object which is to be gripped. From this image, the position and orientation of the object may be determined. The coordinate frame of the camera (for instance pixel) may be mapped via calibration data to the coordinate frame of the robot. There are number of drawbacks associated with such a conventional method:

1. The relevant geometric data required for gripping cannot always be determined from the image: For instance, a steel or iron casting may still be sitting in casting sand, making it unreliable to determine the position of the casting.
2. In general, an offline calibration of the camera system and coordinate frames may be required. Such a calibration commonly requires a complicated apparatus if it is to be fully automated. Actually, the calibration is usually a manual procedure.
3. Changes in temperature may lead to mechanical deformations of the apparatus and to inaccuracies of the positioning.
4. Such simple measurement procedures may be incapable of measuring complicated geometrical profiles which are not parallel to the plane of the camera imaging device.

According to an exemplary embodiment of the invention, which will be described in the following on hand the example of gripping a steel casting (see Fig. 2 and Fig.3) in a production environment, may involve the following measures:

As can be taken from **Fig. 2,** an apparatus 200 may be provided comprising a plane-of-light measurement sensor (POL) 111 placed in a position so that it can observe the required geometric property of an object 201. Alternatively, it is also possible to provide a plurality of plane-of-light measurement sensors. According to an exemplary embodiment, a casting 201 is to be gripped by two gripping pins of a robot 105. The position of the plane-of-light measurement sensor 111 may be chosen to enable the best possible observation of the object property. Furthermore, the relative position of the robot 105 to the measurement device 111 is irrelevant.

**Fig. 3** shows a laboratory implementation 300 according to an exemplary embodiment of the invention.

Fig. 3 again shows the robot 105, a casting simulator 301 and the plane-of-light measurement head 111.

In the following, a calibration procedure according to an exemplary embodiment will be explained.

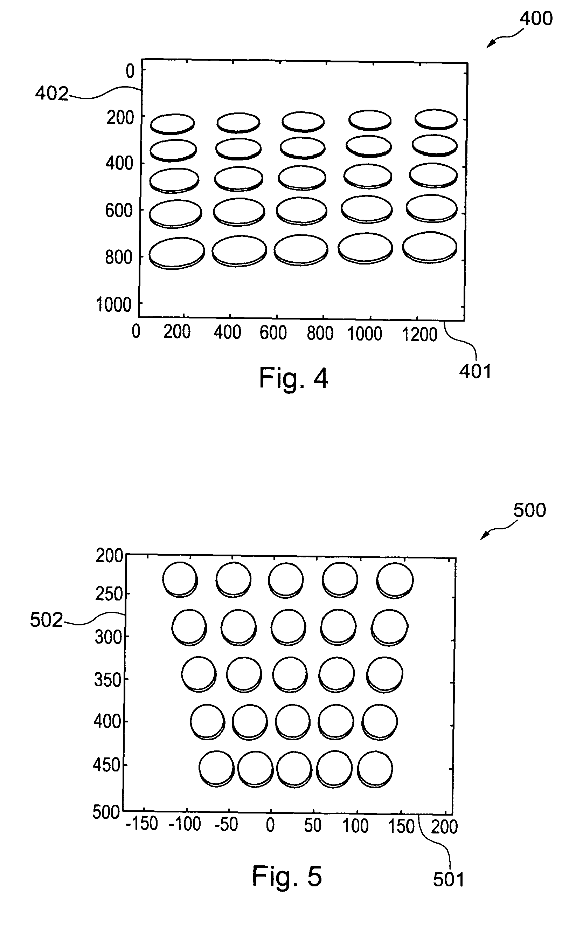

A number of different calibration procedures are possible depending on the errors, of the robot 105, the imaging system 111 and the required accuracy. A first procedure is for the case where the robot 105 and the imaging processing non-linearities are insignificant. The task is to identify a homography H (which may also be denoted as collination, or calibration matrix), which maps the measurement points $p_m$ from the image space (that is to say the pixels, see Fig. 4) to the coordinate frame of the robot $p_r$ (that is to say the real-world matrix coordinate frame, see Fig. 5). In other words:

$$p_r = \mathsf{H}\, p_m \qquad (1)$$

Before describing the calibration procedure in further detail, Fig. 4 and Fig. 5 will be described in more detail.

**Fig. 4** is a diagram 400 comprising an abscissa 401 corresponding to an x-coordinate, and comprising an ordinate 402 corresponding to a y-coordinate of an image frame. Therefore, Fig. 4 shows measured points and circular cross-sections mapped from the robot coordinate frame.

Correspondingly, **Fig. 5** shows a diagram 500 indicative of a robot coordinate frame. Again, an abscissa 501 illustrates an x-axis and an ordinate 502 illustrates a y-axis of the robot coordinate frame. Fig. 5 shows the rectified measured points and the circular cross-sections. The calibration positions have been selected to optically use the viewing region of the camera.

Coming back to the above formula (1), the procedure in this case can proceed as follows:

1. The robot places a suitable object, for example a cylinder, at four or more a priori defined positions within the view of the camera.
2. At each position, points on the object illuminated by the laser are identified in the image in pixel coordinates.
3. The homography H is identified which reduces or minimizes the sum of the squares of the distances of the mapped measured points to the surface of the object placed by the robot.

In the following, such a procedure will be described in a less abstract manner: Consider the case of a robot positioning a cylinder at n positions in a plane-of-light, wherein the longitudinal axis of the cylinder is orthogonal to the plane of the light. In this case, the cross-sections of the cylinder as illuminated by the light are circular: the radius r is known a priori and is the same for all positions. In each position of the cylinder, the centre point of the circle may also be known. All cross-sectional data is known:

$$C_r = \begin{bmatrix} x_{1,0} & y_{1,0} & r \\ \vdots & \vdots & \vdots \\ x_{n,0} & y_{n,0} & r \end{bmatrix} \qquad (2)$$

At each position $i$, a number of illuminated points $p_{i,1...mi}$ on the surface of the cylinder are observed by the camera. The number of points per observation $m_i$ may and will differ. All the observed points lie on ellipses - a projective image of a circle.

A mathematical procedure is now run which may identify the values of the homography H which minimizes the sum of the squares of the distances of the measured points to the corresponding circle. An exemplary implementation of the optimization procedure is:

1. An initial estimation for H is made. For example, ellipses may be fit to the data in the image space. The centre points of the ellipses may be determined and the homography, which best maps the centre points from the image space to the centre points of the corresponding circles in the robot coordinate frame is identified. This may yield an initial estimate for the homography:

$$H = \begin{bmatrix} h_1 & h_2 & h_3 \\ h_4 & h_5 & h_6 \\ h_7 & h_8 & 1 \end{bmatrix} \qquad (3)$$

The constraint H(3,3)=1 may be chosen since it has the singularity when the line at infinity goes through the origin of the image coordinate frame. It is simple to ensure that this case never occurs.

2. The points in the image frame $p_m = (x_{m,i}\ y_{m,i}\ 1)$ are projected to the real-world coordinate frame:

$$x_{r,i} = \frac{h_1 x_{m,i} + h_2 y_{m,i} + h_3}{h_7 x_{m,i} + h_8 y_{m,i} + 1} \quad \text{and} \quad y_{r,i} = \frac{h_4 x_{m,i} + h_5 y_{m,i} + h_6}{h_7 x_{m,i} + h_8 y_{m,i} + 1} \qquad (4)$$

Furthermore, the following term may be defined:

$$w_{r,i} = h_7 x_{m,i} + h_8 y_{m,i} + 1 \qquad (5)$$

3. The cost function $\varepsilon_{i,j}$ for the $j^{th}$ individual points $p_{i,j}$ of the $i^{th}$ measured circle is:

$$\varepsilon_{i,j} = \sqrt{(x_{r,i} - x_{i,0})^2 + (y_{r,i} - y_{i,0})^2} - r \qquad (6)$$

4. The partial derivatives of the cost function with respect to $h_{1...8}$ can now be determined. The derivative with respect to each $h_i$ form the columns of the Jacobian matrix J.

5. The equation to determine an increment in H can be formulated as:

$$J^T J \Delta \boldsymbol{h} = J\ F(\boldsymbol{h}) \qquad (7)$$

where F(h) is the cost function evaluated at a specific value of H.

6. The update for H is determined as

$$\Delta \boldsymbol{h} = (J^T J)^{-1} J\ F(\boldsymbol{h}) \qquad (8)$$

7. Steps 2 to 6 are repeated until the solution converges.

This procedure delivers a matrix H which represents an optimum projective mapping between the measurement space and the coordinate frame of the robot. One aspect of this procedure is that the points are mapped two portions on a circular arc. For a circular arc, the cost function can be calculated explicitly (without involving complex numerical procedures and therefore high computational burden), making the partial derivatives available for optimization.

In the following, gripping or processing of a calibrated robot system will be explained.

The plane-of-light measurement unit may observe points on the surface of the object which have been illuminated by the plane-of-light. The points are projected into the robot coordinate frame, using the homography H determined during calibration. The projected points can now be used for metric processing.

According to another exemplary embodiment of the invention, structured light, for instance two laser planes, can be used to determine not only the position but also the orientation of the object, thereby further increasing the accuracy of the calibration.

A calibration procedure may be provided which corrects the distortion of the optics and/or non-linearities in the coordinate space of the robot.

According to exemplary embodiments of the invention, a fully automated procedure may be provided, and no manual intervention may be required. Since it is fully automated, it is possible to start the procedure at any time, for example to recalibrate after temperature change. Projective errors in the robot coordinate frame may be eliminated or suppressed. The calibration procedure may be fast only requiring a few seconds. The object held by the robot during calibration can be selected to best suit the object which is to be processed.

In the following, some exemplary applications of exemplary embodiments of the invention will be provided. According to one exemplary embodiment, a gripping of steel castings may be made possible. For example, the unpicking of temper-casting from casting sand may be automated. Also the handling of sphero-castings may be made possible. According to another exemplary embodiment, deburring of steel bars and rods may be performed. In such an application, the measurement may deliver the exact outside contour of the rod or bar, and the robot can now run along the edge with a milling head to deburr the rod. According to still another exemplary embodiment, deburring of rail tracks may be performed. In such an application, the plane-of-light measurement unit may be used to determine the orientation and position of the rail. The profile from a separate measurement device may be registered with the position data. The registered profile data may be used to move the robot along the end edge of the rail to enable deburring.

It should be noted that the term "comprising" does not exclude other elements or features and the "a" or "an" does not exclude a plurality. Also elements described in association with different embodiments may be combined.

It should also be noted that reference signs in the claims shall not be construed as limiting the scope of the claims.

## Claims

1. An apparatus for processing an object, the apparatus comprising
   a measurement device adapted for performing a measurement on a reference body;
   a robot arranged separately from the measurement device and adapted to process an object;
   a calibration unit adapted for calibrating the processing by directly mapping a coordinate system of the measurement device to a coordinate system of the robot based on the measurement on the reference body.

2. The apparatus of claim 1,
   wherein the robot is movably mounted;
   wherein the measurement device is mounted spatially fixed.

3. The apparatus of claim 1 or 2,
   wherein the measurement device comprises an image acquisition device adapted for acquiring an image of the reference body and/or for acquiring an image of the object.

4. The apparatus of claim 3,
   wherein the calibration unit is adapted for calibrating the processing by directly mapping a coordinate system of an image space of the image acquisition device to the coordinate system of the robot.

5. The apparatus of claim 4,
   wherein the calibration unit is adapted for calibrating the processing by directly mapping an image pixel coordinate system of the image space of the image acquisition device to the coordinate system of the robot.

6. The apparatus of any one of claims 1 to 5,
   wherein the measurement device is a plane-of-light measurement device.

7. The apparatus of any one of claims 1 to 6,
   wherein the measurement device comprises an electromagnetic radiation source adapted for irradiating the reference body with a planar electromagnetic radiation beam.

8. The apparatus of claim 7,
   wherein the measurement device comprises a camera adapted for detecting a projection of the planar electromagnetic radiation beam on a surface of the reference body or on a surface of the object.

**9.** The apparatus of any one of claims 1 to 8,
wherein the calibration unit is adapted for calibrating the processing by directly mapping the coordinate system of the measurement device to the coordinate system of the robot without involving calculations regarding a real-world coordinate system.

**10.** The apparatus of any one of claims 1 to 9,
wherein the calibration unit is adapted for calibrating the processing by calculating a calibration matrix which directly maps coordinates of the measurement device into coordinates of the robot.

**11.** The apparatus of claim 10,
wherein the reference body is shaped in such a manner that the calculation of the calibration matrix is performable essentially analytically.

**12.** The apparatus of any one of claims 1 to 11,
wherein the robot is adapted to move the reference body to a predetermined number of predetermined positions in accordance with a predetermined calibration sequence;
wherein the measurement device is adapted for performing a measurement on the reference body at the predetermined number of predetermined positions in accordance with the predetermined calibration sequence.

**13.** The apparatus of claim 12,
wherein the predetermined number of predetermined positions is four or larger than four.

**14.** The apparatus of any one of claims 1 to 13,
wherein the reference body is mounted on the robot.

**15.** The apparatus of any one of claims 1 to 14,
wherein the reference body comprises at least one of the group consisting of a rotationally symmetric body, a cylindrically symmetric body, a circular cylindrical body, and an elliptic cylindrical body.

**16.** The apparatus of any one of claims 1 to 15,
wherein geometry data characterizing the reference body is pre-stored in the calibration unit.

**17.** The apparatus of any one of claims 1 to 16,
wherein the calibration unit is adapted for continuously or intermittently repeating the calibration during processing the object or during processing a plurality of objects.

**18.** The apparatus of any one of claims 1 to 17,
comprising a control unit adapted for controlling the robot to process the object in accordance with the calibration.

**19.** The apparatus of claim 18,
wherein the control unit is adapted for controlling the robot to process the object by directly mapping the coordinate system of the measurement device to the coordinate system of the robot based on a measurement on the object performed by the measurement device.

**20.** The apparatus of any one of claims 1 to 19,
adapted for processing, as the object, one of the group consisting of a machine, a machine part, and a workpiece.

**21.** A method of processing an object by a robot arranged separately from a measurement device, the method comprising performing a measurement on a reference body using the measurement device;
calibrating the processing by directly mapping a coordinate system of the measurement device to a coordinate system of the robot based on the measurement on the reference body.

**22.** A program element, which, when being executed by a processor, is adapted to control or carry out a method of claim 21 of processing an object by a robot.

**23.** A computer-readable medium, in which a computer program is stored which, when being executed by a processor, is adapted to control or carry out a method of claim 21 of processing an object by a robot.

Fig. 1

Fig. 2

Fig. 3

Fig. 4

Fig. 5

**European Patent**
**Office**

**EUROPEAN SEARCH REPORT**

Application Number

EP 07 02 4300

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 468 792 A (VMT BILDVERARBEITUNGSSYSTEME G [DE]) 20 October 2004 (2004-10-20) * paragraph [0007] - paragraph [0062] * * figures 2,3 * | 1-23 | INV. B25J9/16 |
| X | US 6 101 455 A (DAVIS MICHAEL S [US]) 8 August 2000 (2000-08-08) * the whole document * | 1-23 | |
| X | DE 41 15 846 A1 (AMELING WALTER [DE]; MEISEL ANDREAS DIPL ING [DE]; FOEHR RALPH DR ING) 19 November 1992 (1992-11-19) * the whole document * | 1-23 | |
| X | PAULI J ET AL: "Vision-based integrated system for object inspection and handling" ROBOTICS AND AUTONOMOUS SYSTEMS, ELSEVIER SCIENCE PUBLISHERS, AMSTERDAM, NL, vol. 37, no. 4, 31 December 2001 (2001-12-31), pages 297-309, XP004324089 ISSN: 0921-8890 * abstract * * points 4, 6, 10 and 11 * * figures 1,4 * | 1-23 | TECHNICAL FIELDS SEARCHED (IPC) B25J |
| X | EP 0 489 919 A (FANUC LTD [JP]) 17 June 1992 (1992-06-17) * column 1, line 37 - column 3, line 58 * * claims 1,2,7; figure 1 * | 1-11, 14-16, 18-23 | |

The present search report has been drawn up for all claims

| Place of search | Date of completion of the search | Examiner |
|---|---|---|
| The Hague | 12 June 2008 | Orobitg Oriola, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 07 02 4300

This annex lists the patent family members relating to the patent documents cited in the above-mentioned European search report.
The members are as contained in the European Patent Office EDP file on
The European Patent Office is in no way liable for these particulars which are merely given for the purpose of information.

12-06-2008

| Patent document cited in search report | | Publication date | Patent family member(s) | | Publication date |
|---|---|---|---|---|---|
| EP 1468792 | A | 20-10-2004 | NONE | | |
| US 6101455 | A | 08-08-2000 | NONE | | |
| DE 4115846 | A1 | 19-11-1992 | NONE | | |
| EP 0489919 | A | 17-06-1992 | DE | 69103871 D1 | 13-10-1994 |
| | | | DE | 69103871 T2 | 12-01-1995 |
| | | | WO | 9119240 A1 | 12-12-1991 |
| | | | JP | 2690603 B2 | 10-12-1997 |
| | | | JP | 4035885 A | 06-02-1992 |
| | | | US | 5329469 A | 12-07-1994 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6321137 B

**Non-patent literature cited in the description**

- **Hanqi Zhuang ; Zvi S. Roth.** Camera Aided Robot Calibration. CRC Press, 1996